# EUROPÄISCHE PATENTSCHRIFT

(11) **EP 3 186 869 B1**
(45) Veröffentlichungstag und Bekanntmachung des Hinweises auf die Patenterteilung: **26.05.2021**
(21) Anmeldenummer: 14793498.8
(22) Anmeldetag: 28.10.2014
(51) Int. Cl.: H02J 3/36, F03D 9/00, H02J 1/08, F03D 9/25, F03D 7/04, H02J 3/38

(54) **UMRICHTERANORDNUNG MIT EINER MEHRZAHL VON UMRICHTERN FÜR EINEN WINDPARK**
CONVERTER ARRANGEMENT WITH A PLURALITY OF CONVERTERS FOR A WIND PARK
ENSEMBLE DE CHANGEURS DE FRÉQUENCE COMPRENANT UNE PLURALITÉ DE CHANGEURS DE FRÉQUENCE POUR UN PARC ÉOLIEN

(43) Veröffentlichungstag der Anmeldung: 05.07.2017
(73) Patentinhaber: Siemens Energy Global GmbH & Co. KG, 81739 München (DE)
(72) Erfinder: MENKE, Peter, 96237 Oberfüllbach (DE)
(86) Internationale Anmeldenummer: PCT/EP2014/073109
(87) Internationale Veröffentlichungsnummer: WO 2016/066188

(56) Entgegenhaltungen:
- EP-A2- 2 194 638
- WO-A1-2009/082204
- WO-A1-2014/131454
- WO-A1-2014/131456
- WO-A1-2014/131457
- US-A1- 2012 175 962

## Beschreibung

Die Erfindung betrifft eine Umrichteranordnung zum Übertragen elektrischer Leistung zwischen einen Wechselspannungsnetz und einer Gleichspannungsleitung, wobei die Umrichteranordnung mehrere gleichspannungsseitig miteinander und wechselspannungsseitig mit dem Wechselspannungsnetz verbindbare Umrichter umfasst, wobei die Umrichter auf separaten, ihnen zugeordneten Tragstrukturen angeordnet und gleichspannungsseitig mit einem Gleichspannungsanschluss zum Verbinden der Umrichteranordnung mit der Gleichspannungsleitung verbindbar sind, wobei die Umrichteranordnung ferner eine separate, zentrale Plattform umfasst.

Eine solche Umrichteranordnung ist beispielsweise aus dem Artikel von M. Guan et al "A novel concept of offshore windpower collection and transmission system based on cascaded converter topology", Euro. Trans. Electr. Power (2012), bekannt. Die Umrichter der bekannten Umrichteranordnung sind gleichspannungsseitig parallel geschaltet und mit einem zentralen DC-DC-Aufwärtswandler und über den DC-DC-Aufwärtswandler mit dem Gleichspannungsanschluss verbunden.

Der Gleichspannungsanschluss und der zentrale DC-DC-Aufwärtswandler sind auf einer zentralen Offshore-Plattform angeordnet.

Umrichteranordnungen mit gleichspannungsseitig miteinander verbundenen Umrichtern sind beispielsweise aus der WO 2014/131456 A1, der WO 2014/131454 A1 und der WO 2014/131457 A1 bekannt.

Eine Windparkregelung eines Windparks, der mittels einer Hochspannungsgleichstromübertragungsanlage mit einem Versorgungsnetz verbunden ist, ist in der WO 2009/082204 A1 beschrieben.

In der EP 2 194 638 A2 ist eine Energieversorgungsanlage zur Versorgung einer unter Wasser sich befindenden Last mit elektrischer Energie offenbart, wobei die Energieversorgungsanlage eine Vielzahl von Umrichtern umfasst.

Die Aufgabe der Erfindung ist es, eine Umrichteranordnung der oben genannten Art vorzuschlagen, die kostengünstig und zuverlässig ist.

Die Aufgabe wird durch die Umrichteranordnung nach Anspruch 1 gelöst.

Durch die Anordnung wenigstens einer Gleichspannungs- oder Wechselspannungskomponente der Umrichter auf der zentralen Plattform kann vorteilhaft die jeweilige den Umrichter tragende Tragstruktur entlastet werden. Ferner müssen bestimmte funktionelle Teile der Umrichteranordnung nicht mehr für jeden Umrichter einzeln auf den Tragstrukturen vorgesehen werden, sondern können zentral auf der zentralen Plattform zusammengefasst bereitgestellt sein. Auf diese Weise können Kosten der Umrichteranordnung gesenkt werden.

Zudem ist die Wartung der Umrichter erleichtert. Die auf der zentralen Plattform angeordneten Gleichspannungs- bzw. Wechselspannungskomponenten sind für die Wartung durchführenden Arbeiter leichter zugänglich, wodurch die Wartungs- und Reparaturarbeiten zügiger und sicherer durchgeführt werden können. Dadurch kann die Zuverlässigkeit der gesamten Umrichteranordnung erhöht werden.

Als Gleichspannungs- und Wechselspannungskomponenten der Umrichter werden in diesem Zusammenhang alle üblicherweise zum Betreiben der Umrichter vorgesehenen Komponenten angesehen, wie beispielsweise Gleichspannungs- und Wechselspannungsschaltanlagen, Transformatoren, Glättungsdrosseln, Regelungs- und Schutz-Equipment, Filter und dergleichen, die üblicherweise gleichspannungsseitig bzw. wechselspannungsseitig der Umrichter angeordnet sind.

Im Rahmen der Erfindung können sowohl wenigstens eine Gleichspannungskomponente als auch wenigstens eine Wechselspannungskomponente der Umrichter auf der zentralen Plattform angeordnet sein.

Gemäß einer bevorzugten Ausführungsform der Erfindung umfasst die Umrichteranordnung eine Regelungseinrichtung zum Regeln der Umrichter, die auf der zentralen Plattform angeordnet ist. Die Regelungseinrichtung kann dabei bspw. eine Spannungs- oder Stromregelung und/oder, eine Einheit zur Steuerung und/oder zum Schutz der Umrichter umfassen. Damit sind die einzelnen Umrichter-Regelungen, die den einzelnen Umrichtern zugeordnet sind, in der auf der zentralen Plattform untergebrachten Regelungseinrichtung zusammengefasst. Auf diese Weise kann das auf den Tragstrukturen angeordnete Equipment auf ein Minimum beschränkt werden, was eine weitere Reduzierung der Kosten der Umrichteranordnung ermöglicht.

Gemäß einer weiteren Ausführungsform der Erfindung umfasst die Umrichteranordnung eine Anlange zur Kompensation von Blindleistung in dem Wechselspannungsnetz. Die Anlage zur Kompensation von Blindleistungen ist dabei auf der zentralen Plattform angeordnet.

Vorteilhaft kann auf der zentralen Plattform ein weiterer Umrichter vorgesehen sein, der gleichspannungsseitig mit den übrigen Umrichtern sowie mit dem Gelichspannungsanschluss verbunden ist. Zugleich ist der weitere Umrichter wechselspannunsgsseitig mit dem Wechselspannungsnetz verbunden.

Zweckmäßigerweise sind die Umrichter in Reihe oder parallel geschaltet. Erfindungsgemäß ist jeder der Umrichter mittels eines dem Umrichter zugeordneten Überbrückungsschalters gleichspannungsseitig überbrückbar. Dabei sind die Überbrückungsschalter auf der zentralen Plattform angeordnet. Mittels der Überbrückungsschalter können fehlerhafte Umrichter in einer Reihenschaltung überbrückt werden. Durch die Möglichkeit der Überbrückung der fehlerhaften Umrichter kann die Zuverlässigkeit der Umrichteranordnung weiter erhöht werden. Sind die Umrichter in einer Parallelschaltung verbunden, so kann es von Vorteil sein, Schalter zum Auftrennen der Verbindungen im Fehlerfall vorzusehen.

Gemäß einer bevorzugten Ausführungsform der Erfindung sind die Gleichspannungsverbindungen zum Verbinden der Umrichter miteinander jeweils über die zentrale Plattform geführt. Es können beispielsweise alle oder auch nur einige, insbesondere wenigstens eine der Gleichspannungsverbindungen über die zentrale Plattform geführt sein. Die übrigen Gleichspannungsverbindungen erstrecken sich dementsprechend direkt zwischen den Umrichtern. Auf diese Weise kann die von den Gleichspannungsleitungen angespannte Fläche reduziert werden.

Bevorzugt umfasst die Umrichteranordnung ferner eine Filteranordnung zur Oberschwingungsdämpfung in dem Wechselspannungsnetz. Die Filteranordnung ist auf der zentralen Plattform angeordnet und mittels einer zugeordneten Wechselspannungsverbindung mit dem Wechselspannungsnetz verbunden.

Gemäß einer weiteren Ausführungsform der Erfindung umfasst die Umrichteranordnung eine beispielsweise auf/an der zentralen Plattform untergebrachte Energieversorgungseinrichtung zur Energieversorgung des an die Umrichteranordnung angeschlossenen Wechselspannungsnetzes vorgesehen. Die Bereitstellung der Energieversorgungseinrichtung kann insbesondere im Falle einer Verwendung von Umrichtern vorteilhaft sein, die eine Leistungsübertragung in nur einer Richtung erlauben. Im besonderen Falle einer Windparkanbindung, wofür sich die erfindungsgemäße Umrichteranordnung insbesondere eignet, ist es oftmals erforderlich, das an die Umrichteranordnung angeschlossene Wechselspannungsnetz mit elektrischer Leistung zu versorgen. Mit Hilfe dieser elektrischen Energie können beispielsweise die Windenergieanlagen des Windparks ausgerichtet und die Rotorblätter um den jeweils erforderlichen Winkel verstellt werden. Die Energieversorgungseinrichtung umfassen beispielsweise ein Dieselmotor, der einen Generator antreibt, wobei der Generator die benötigte elektrische Leistung erzeugt, die in das mit dem Windpark verbundene Wechselspannungsnetz eingespeist wird.

Vorteilhafterweise ist die Energieversorgungseinrichtung jedoch so ausgestaltet, dass auf einen Dieselmotor verzichtet werden kann, da der Dieselmotor wartungsintensiv ist und ständig mit Diesel versorgt werden muss. Insbesondere bei einer meerseitigen Aufstellung der erfindungsgemäßen Umrichteranordnung ist die Kraftstoffversorgung bei Wind und Wetter beschwerlich. Aus diesem Grunde ist es im Rahmen der Erfindung zweckmäßig, eine Energieversorgungseinrichtung bereitzustellen, mit denen die Leistung von einem landseitigen Energieversorgungsnetz oder einem benachbarten meerseitigen Wechselspannungsnetz eingespeist werden kann. Beispielsweise umfasst die Energieversorgungseinrichtung einen selbstgeführten Umrichter (beispielsweise ein sogenannter Voltage Source Converter, insbesondere ein sogenannter modularer Mehrstufenumrichter), der mit den übrigen Umrichtern in Reihe geschaltet ist, und der ein- und abschaltbare Leistungshalbleiterschalter (beispielsweise IGBT's) aufweist.

Mit Hilfe des selbstgeführten Umrichters ist es möglich, die Gleichspannungsleitung, durch welche die Umrichteranordnung mit dem landseitigen Energieversorgungsnetz verbunden ist, auch die für die Bereitstellung des Leistungsflusses in entgegengesetzter Richtung, also von Land zum Windpark, zu nutzen.

Die Energieversorgungseinrichtung umfasst zweckmäßigerweise eine sich, beispielsweise zumindest teilweise durch Wasser erstreckende Energieversorgungsleitung, die zum Beispiel eine Wechselspannungsleitung mit einer Spannung im Bereich von 50 bis 70 kV ist.

Es wird ferner als vorteilhaft angesehen, wenn jedem Umrichter eine Wechselspannungsschaltanlage zum Trennen einer dem Umrichter zugeordneten Wechselspannungsleitung des Wechselspannungsnetzes zugeordnet ist. Die Wechselspannungsschaltanlagen sind dabei auf den Tragstrukturen angeordnet.

Gemäß einer besonders vorteilhaften Ausführungsform der Erfindung umfasst die Umrichteranordnung wenigstens eine begehbare Brücke, die zwischen der zentralen Plattform und zumindest einer der Tragstrukturen angeordnet ist und diese verbindet. Dabei ist die Brücke zur Aufnahme von Gleichspannungs- und aller zum Betrieb der Umrichteranordnung notwendigen Wechselspannungsverbindungen eingerichtet. Insbesondere ist die begehbare Brücke von Arbeitern begehbar, so dass die Wartungs- und Reparaturarbeiten an den Tragstrukturen bzw. den auf den Tragstrukturen angeordneten Umrichtern von den Arbeitern sicher und zuverlässig ausgeführt werden können. Die Arbeiter können entsprechend von der zentralen Plattform die Tragstrukturen erreichen.

Es ist besonders vorteilhaft, wenn die Tragstrukturen der Umrichteranordnung in einem Meer oder einer See angeordnet werden können. Dabei ist es von besonderem Vorteil, wenn zumindest eine der Tragstrukturen zum Halten einer Windkraftanlage, bzw. einer Mehrzahl von Windkraftanlagen eines Windparks, beispielsweise eines Offshore-Windparks, eingerichtet ist.

Es ist ferner vorteilhaft, wenn für die Tragstrukturen, die Windkraftanlagen und die zentrale Plattform gleiche Fundamente verwendet werden. Dies führt zu vorteilhaften Skaleneffekten und zu einer weiteren Kostensenkung.

Bevorzugt sind die Umrichter gleichspannungsseitig in einer elektrischen Reihenschaltung miteinander verbunden. Es ist jedoch ebenfalls denkbar, wenn die Umrichter miteinander in einer Parallelschaltung miteinander verbunden sind.

Zur weiteren Senkung der Betriebskosten der Umrichteranordnung kann die Plattform ferner einen Hubschrauberlandeplatz und/oder Unterkünfte für Arbeiter, die die Wartungs- bzw. Reparaturarbeiten an der Umrichteranordnung durchführen sollen, eine Bootanlegestelle, einen Treibstoff-tank umfassen. Diese Teile der Umrichteranordnung werden lediglich einmal benötigt und können daher an der zentralen Plattform angeordnet sein.

Gemäß einer Ausführungsform der Erfindung ist wenigstens einer der Umrichter ein unidirektionaler Gleichrichter. Diese Art von Umrichtern ist besonders kostengünstig und daher in der erfindungsgemäßen Anordnung zu bevorzugen.

Gemäß einer besonders vorteilhaften Ausführungsform der Erfindung ist der unidirektionale Gleichrichter ein Sechs-Puls-Diodengleichrichter bzw. ein Zwölf-Puls-Diodengleichrichter. Diodengleichrichter sind besonders kostengünstig und einfach in Betrieb. Sie sind zudem leicht und verlustarm.

Ferner betrifft die Erfindung eine Anlage zum Übertragen elektrischer Leistung zwischen einem in einem Meer oder einer See angeordneten Windpark mit einer Mehrzahl von Windenergieanlagen und einem landseitigen Energieverteilungsnetz, wobei die Anlage einen landseitigen selbstgeführten Umrichter sowie mit dem selbstgeführten Umrichter mittels einer Gleichspannungsleitung verbindbare Umrichteranordnung umfasst.

Die Aufgabe der Erfindung besteht darin, eine derartige Anlage vorzuschlagen, die besonders kostengünstig und zuverlässig in Betrieb ist.

Die Aufgabe wird erfindungsgemäß dadurch gelöst, dass die Umrichteranordnung gemäß einem der Ansprüche 1 - 14 ausgeführt ist.

Der Windpark kann dabei beispielsweise über das Wechselspannungsnetz mit der Umrichteranordnung verbunden bzw. verbindbar sein.

Die Tragstrukturen für die Umrichter der Umrichteranordnung können beispielsweise gemäß der in der Druckschrift WO 2014/131457 A1 dargestellten Beispiele ausgebildet sein, insbesondere als Teil eines Fundamentes für eine Windkraftanlage.

Die Vorteile der erfindungsgemäßen Anlage ergeben sich aus den bereits beschriebenen Vorteilen der erfindungsgemäßen Umrichteranordnung.

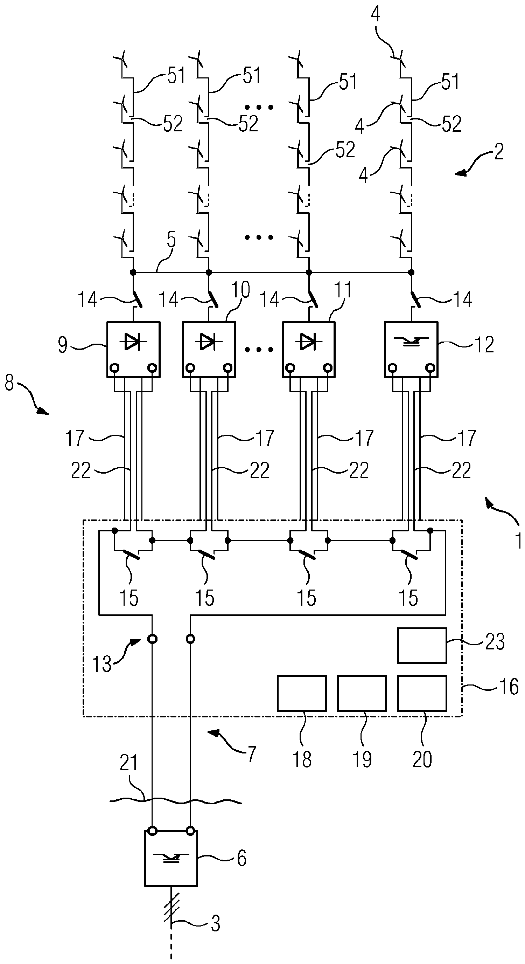

Die Erfindung soll im Folgenden anhand des in der Figur dargestellten Ausführungsbeispiels erläutert werden.

Die Figur zeigt im Einzelnen in einer schematischen Darstellung ein Ausführungsbeispiel einer erfindungsgemäßen Anlage 1 zum Übertragen elektrischer Leistung zwischen einem in einem Meer angeordneten Windpark 2 und einem landseitigen dreiphasigen Energieverteilungsnetz 3. Der Windpark 2 umfasst eine Mehrzahl von Windenergieanlagen 4, die an ein seeseitiges Wechselspannungsnetz 5 angeschlossen sind. Jede der Windenergieanlagen 4 ist von einer ihr zugeordneten Tragstruktur getragen. Die von den Windenergieanlagen 4 erzeugte elektrische Leistung wird in ein Wechselspannungsnetz 5 eingespeist. Das Wechselspannungsnetz 5 umfasst mehrere Stränge 51, von denen in der Figur lediglich 4 grafisch dargestellt sind und punktiert das Vorhandensein weiterer Stränge angedeutet ist. Jeder der Stränge 51 verbindet ihm zugeordnete Windenergieanlagen 4 in einer elektrischen Reihenschaltung. Diese Reihenschaltung ist mittels Schalter 52 unterbrechbar. Die Stränge 51 umfassen sogenannte Interray-Kabel, deren Spannung vorzugsweise 60 bis 70 kV beträgt.

Die Anlage 1 umfasst ferner einen selbstgeführten Umrichter 6, der an Land angeordnet ist. Der selbstgeführte Umrichter 6 ist wechselspannungsseitig mit dem Energieverteilungsnetz 3 verbunden. Ferner ist der Umrichter 6 gleichspannungsseitig mit einer Gleichspannungsleitung 7 verbunden und über die Gleichspannungsleitung 7 mit einer Umrichteranordnung 8. Die Gleichspannungsleitung 7 führt somit vom Land in das Meer, wobei die Uferlinie durch eine geschwungene Linie 21 angedeutet ist.

Die Umrichteranordnung 8 umfasst eine Mehrzahl von Umrichtern 9, 10, 11, 12, wobei in der Figur vier der Umrichter 9, 10, 11, 12 gezeigt sind, die Umrichteranordnung 8 jedoch jede geeignete Anzahl von Umrichtern umfassen kann. Jede der Umrichter 9, 10, 11, 12 ist auf einer eigenen separaten Tragstruktur angeordnet. Die Tragstrukturen können dabei eigens dafür vorgesehene, im Meer aufgestellte Tragstrukturen sein. Die Tragstrukturen können aber einen Teil eines Fundamentes einer der Windkraftanlagen 4 sein. Die Umrichter 9, 10, 11, 12 sind wechselspannungsseitig dem Wechselspannungsnetz 5 verbunden. Ferner sind die Umrichter 9, 10, 11, 12 gleichspannungsseitig miteinander und mit einem Gleichspannungsanschluss 13 der Umrichteranordnung 8 verbunden. Der Gleichspannunganschluss 13 verbindet die Umrichteranordnung 8 mit der Gleichspannungsleitung 7.

Die jeweilige Verbindung der Umrichter 9, 10, 11, 12 mit dem Wechselspannungsnetz 5 ist mittels Wechselspannungsschaltanlagen 14 auftrennbar.

Die Umrichter 9, 10, 11 sind als Diodengleichrichter ausgebildet. Die Diodengleichrichter können dabei als Sechs-Punkt- bzw. Zwölf-Punkt-Gleichrichter ausgebildet sein. Der Umrichter 12 ist als ein selbstgeführter Umrichter ausgebildet. Der Umrichter 12 kann auf diese Weise zur Energieversorgung des Wechselspannungsnetzes 5 verwendet werden. Gleichspannungsseitig ist jeder der Umrichter 9, 10, 11, 12 mittels eines Überbrückungsschalters 15 überbrückbar.

Die Umrichteranordnung 8 umfasst ferner eine separate zentrale Plattform 16. Die zentrale Plattform 16 ist zur Aufnahme von Gleichspannungskomponenten der Umrichter 9, 10, 11, 12 eingerichtet. So sind im gezeigten Ausführungsbeispiel als Gleichspannungskomponenten die Überbrückungsschalter 15 auf der zentralen Plattform 16 angeordnet.

Darüber hinaus sind auf der zentralen Plattform weitere Komponenten der Umrichteranordnung 8 angeordnet. Folgende Wechselspannungskomponenten der Umrichter sind auf der zentralen Plattform untergebracht:
Eine Blindleistungskompensationsanlage 18 zur Kompensation von Blindleistung im Wechselspannungsnetz 5, eine Filteranordnung 19 zur Dämpfung von Oberschwingungen im Wechselspannungsnetz 5 sowie eine Energieversorgungseinrichtung 20 zur Energieversorgung des Wechselspannungsnetzes 5. Bei der Energieversorgungseinrichtung 20 handelt es sich im dargestellten Ausführungsbeispiel um einen Dieselgenerator.

Ferner trägt die zentrale Plattform 16 eine Regelungseinrichtung 23 zur Regelung der Umrichteranordnung.

Zu beachten ist, dass die für den Einsatz der beschriebenen Komponenten notwendige Verkabelung aus Übersichtlichkeitsgründen in der Figur nicht grafisch dargestellt ist. Die entsprechenden Verbindungen sind jedoch geeigneterweise über begehbare Brücken 17 geführt.

Die zentrale Plattform 16 ist mit den Umrichtern 9, 10, 11, 12 bzw. den Umrichtern zugeordneten Tragstrukturen jeweils mittels einer der begehbaren Brücken 17 verbunden. Die begehbaren Brücken 17 sind von Arbeitern zu betreten, die Wartungs- bzw. Reparaturarbeiten an den Tragstrukturen und/oder den Umrichtern 9, 10, 11, 12 durchführen. Die begehbaren Brücken 17 sind zur Aufnahme von Gleichspannungsverbindungen 22 eingerichtet, die die Umrichter 9, 10, 11, 12 miteinander und mit dem Gleichspannungsanschluss 13 der Umrichteranordnung verbinden. Ferner sind die begehbaren Brücken 17 zur Aufnahme von Wechselspannungsverbindungen eingerichtet, die von der zentralen Plattform 16 zu den Umrichtern 9, 10, 11, 12 und/oder zum Wechselspannungsnetz 5 führen.

Bezugszeichentabelle
- 1: Anlage zum Übertragen elektrischer Leistung
- 2: Windpark
- 3: Energieverteilungsnetz
- 4: Windenergieanlage
- 5: Wechselspannungsnetz
- 51: Strang
- 52: Schalter
- 6: selbstgeführter Umrichter
- 7: Gleichspannungsleitung
- 8: Umrichteranordnung
- 9-12: Umrichter
- 13: Gleichspannungsanschluss
- 14: Wechselspannungsschaltanlage
- 15: Überbrückungsschalter
- 16: zentrale Plattform
- 17: begehbare Brücke
- 18: Blindleistungskompensationsanlage
- 19: Filteranordnung
- 20: Energieversorgungseinrichtung
- 21: Uferlinie
- 22: Gleichspannungsverbindung
- 23: Regelungseinrichtung

## Patentansprüche

1. Umrichteranordnung (8) zum Übertragen elektrischer
Leistung zwischen einem Wechselspannungsnetz (5) eines Windparks und
einer Gleichspannungsleitung (7), wobei die Umrichteranordnung (8) mehrere gleichspannungsseitig miteinander und wechselspannungsseitig mit dem Wechselspannungsnetz (5) verbindbare Umrichter (9, 10, 11, 12) umfasst,
wobei die Umrichter (9-12) gleichspannungsseitig miteinander in einer elektrischen Reihenschaltung verbunden sind, und wobei die Umrichter (9-12) auf separaten, ihnen zugeordneten Tragstrukturen angeordnet und gleichspannungsseitig mit einem Gleichspannungsanschluss (13) zum Verbinden der Umrichteranordnung (8) mit der Gleichspannungsleitung (7) verbindbar sind, und wobei die Umrichteranordnung (8) ferner eine separate, zentrale Plattform (16) umfasst, wobei jeder der Umrichter (9-12) mittels eines zugeordneten Überbrückungsschalters (15) gleichspannungsseitig überbrückbar ist, **dadurch gekennzeichnet, dass** die Überbrückungsschalter (15) auf der zentralen Plattform (16) angeordnet sind.

2. Umrichteranordnung (8) nach Anspruch 1, wobei die Umrichteranordnung (8) ferner eine auf der zentralen Plattform (16) angeordnete Regelungseinrichtung (23) zum Regeln der Umrichter (9-12) aufweist.

3. Umrichteranordnung (8) nach einem der vorangehenden Ansprüche, wobei die Umrichteranordnung (8) eine Anlage (18) zur Kompensation von Blindleistung in dem Wechselspannungsnetz (5) umfasst, die auf der zentralen Plattform (16) angeordnet ist.

4. Umrichteranordnung (8) nach einem der vorangehenden Ansprüche, wobei ein weiterer Umrichter vorgesehen ist, der auf der zentralen Plattform (16) angeordnet und gleichspannungsseitig mit den übrigen Umrichtern (9-12) sowie mit dem Gleichspannungsanschluss (13) und wechselspannungsseitig mit dem Wechselspannungsnetz (15) verbunden ist.

5. Umrichteranordnung (8) nach Anspruch 1, wobei die gleichspannungsseitigen Gleichspannungsverbindungen (22) zum Verbinden der Umrichter (9-12) miteinander jeweils über die zentrale Plattform (16) geführt sind.

6. Umrichteranordnung (8) nach einem der vorangehenden Ansprüche, wobei die Umrichteranordnung (8) eine Filteranordnung (19) zur Oberschwingungsdämpfung in dem Wechselspannungsnetz (5) aufweist, die auf der zentralen Plattform (16) angeordnet ist.

7. Umrichteranordnung (8) nach einem der vorangehenden Ansprüche, wobei die Umrichteranordnung (8) ferner eine Energieversorgungseinrichtung (20) zur Energieversorgung der Umrichter (9-12) umfasst, wobei die Energieversorgungseinrichtung (20) auf der zentralen Plattform (16) angeordnet ist.

8. Umrichteranordnung (8) nach einem der vorangehenden Ansprüche, wobei jeder Umrichter (9-12) eine Wechselspannungsschaltanlage (14) zum Trennen einer dem Umrichter zugeordneten Wechselspannungsleitung des Wechselspannungsnetzes (5) umfasst, wobei die Wechselspannungsschaltanlagen (14) auf den Tragstrukturen angeordnet sind.

9. Umrichteranordnung (8) nach einem der vorangehenden Ansprüche, wobei die Umrichteranordnung begehbare Brücken (17) umfasst, die zwischen der zentralen Plattform (16) und den Tragstrukturen angeordnet sind und diese verbinden, wobei die Brücken (17) zur Aufnahme von Gleichspannungs- und Wechselspannungsverbindungen eingerichtet sind.

10. Umrichteranordnung (8)nach einem der vorangehenden Ansprüche, wobei die Tragstrukturen im Meer oder in einer See anordenbar sind, wobei zumindest eine der Tragstrukturen zum Halten einer Windenergieanlage (4) dimensioniert ist.

11. Umrichteranordnung (8) nach einem der vorangehenden Ansprüche, wobei die zentrale Plattform (16) ferner umfasst:
- einen Hubschrauberlandeplatz und/oder
- Unterkünfte für Arbeiter und/oder
- eine Boot-Anlegestelle und/oder
- einen Treibstoff-Tank.

12. Umrichteranordnung (8) nach einem der vorangehenden Ansprüche, wobei wenigstens einer der Umrichter (9 - 12) ein unidirektionaler Gleichrichter ist.

13. Umrichteranordnung (8) nach Anspruch wobei der wenigstens eine unidirektionale Gleichrichter ein 6- oder 12-Puls Diodengleichrichter ist.

14. Anlage (1) zum Übertragen elektrischer Leistung zwischen einem in einem Meer oder einer See angeordneten Windpark (2) mit einer Mehrzahl von Windenergieanlagen (4) und einem landseitigen Energieverteilungsnetz (3), wobei die Anlage (1) einen landseitigen selbstgeführten Umrichter (6) sowie mit dem selbstgeführten Umrichter (6) mittels einer Gleichspannungsleitung (7) verbindbare Umrichteranordnung (8) gemäß einem der Ansprüche 1 bis 13 umfasst.

## Claims

1. Converter arrangement (8) for transmitting electrical power between an AC voltage network (5) of a wind farm and a DC voltage line (7), wherein the converter arrangement (8) comprises a plurality of converters (9, 10, 11, 12) that can be connected on the DC side to one another and can be connected on the AC side to the AC voltage network (5), wherein the converters (9-12) are connected on the DC side to one another in an electrical series circuit, and wherein the converters (9-12) are arranged on separate support structures associated therewith and can be connected on the DC side to a DC voltage terminal (13) for connecting the converter arrangement (8) to the DC voltage line (7), and wherein the converter arrangement (8) also comprises a separate, central platform (16), wherein each of the converters (9-12) can be bypassed on the DC side by means of an associated bypass switch (15), **characterized in that** the bypass switches (15) are arranged on the central platform (16).

2. Converter arrangement (8) according to Claim 1, wherein the converter arrangement (8) also has a regulating device (23) for regulating the converters (9-12) that is arranged on the central platform (16).

3. Converter arrangement (8) according to either of the preceding claims, wherein the converter arrangement (8) comprises an installation (18), which is arranged on the central platform (16), for compensating for reactive power in the AC voltage network (5).

4. Converter arrangement (8) according to one of the preceding claims, wherein a further converter is provided, which is arranged on the central platform (16) and is connected on the DC side to the other converters (9-12) and to the DC voltage terminal (13) and on the AC side to the AC voltage network (15).

5. Converter arrangement (8) according to Claim 1, wherein the DC voltage connections (22) on the DC side are each led via the central platform (16) to connect the converters (9-12) to one another.

6. Converter arrangement (8) according to one of the preceding claims, wherein the converter arrangement (8) has a filter arrangement (19), which is arranged on the central platform (16), for harmonic damping in the AC voltage network (5) .

7. Converter arrangement (8) according to one of the preceding claims, wherein the converter arrangement (8) also comprises an energy supply device (20) for supplying energy to the converters (9-12), wherein the energy supply device (20) is arranged on the central platform (16).

8. Converter arrangement (8) according to one of the preceding claims, wherein each converter (9-12) comprises an AC voltage switchgear assembly (14) for isolating an AC voltage line of the AC voltage network (5) that is associated with the converter, wherein the AC voltage switchgear assemblies (14) are arranged on the support structures.

9. Converter arrangement (8) according to one of the preceding claims, wherein the converter arrangement comprises accessible bridges (17), which are arranged between the central platform (16) and the support structures and connect them, wherein the bridges (17) are set up to receive DC voltage and AC voltage connections.

10. Converter arrangement (8) according to one of the preceding claims, wherein the support structures can be arranged in the sea or in a lake, wherein at least one of the support structures is dimensioned to bear a wind energy installation (4).

11. Converter arrangement (8) according to one of the preceding claims, wherein the central platform (16) also comprises:
- a helipad and/or
- accommodation for workers and/or
- a boat mooring area and/or
- a fuel tank.

12. Converter arrangement (8) according to one of the preceding claims, wherein at least one of the converters (9-12) is a unidirectional rectifier.

13. Converter arrangement (8) according to Claim 12, wherein the at least one unidirectional rectifier is a 6-pulse or a 12-pulse diode rectifier.

14. Installation (1) for transmitting electrical power between a wind farm (2) arranged in a sea or in a lake and having a plurality of wind energy installations (4) and a land-based energy distribution network (3), wherein the installation (1) comprises a land-based self-commutated converter (6) and a converter arrangement (8) according to one of Claims 1 to 13 that can be connected to the self-commutated converter (6) by means of a DC voltage line (7).

## Revendications

1. Ensemble (8) d'onduleurs pour la transmission de puissance électrique entre un réseau (5) à tension alternative d'un parc éolien et une ligne (7) à tension continue, l'ensemble (8) d'onduleurs comprenant plusieurs onduleurs (9, 10, 11, 12) pouvant être reliés entre eux du côté de la tension continue et au réseau à tension alternative du côté de la tension alternative, les onduleurs (9 à 12) étant, du côté de la tension continue, connectés entre eux suivant un circuit électrique série et les onduleurs (9 à 12) étant montés sur des structures de support distinctes, qui leur sont associées, et pouvant être reliées du côté de la tension continue à une borne (13) de tension continue pour relier l'ensemble (8) d'onduleurs, à la ligne (7) à tension continue, et dans lequel l'ensemble (8) d'onduleurs comprend en outre une plateforme (16) centrale distincte,
dans lequel chacun des onduleurs (9 à 12) peut être shunté du côté de la tension continue au moyen d'un interrupteur (15) de shuntage associé,
**caractérisé en ce que** les interrupteurs (15) de shuntage sont montés sur la plateforme (16) centrale.

2. Ensemble (8) d'onduleurs suivant la revendication 1, dans lequel l'ensemble (8) d'onduleurs a en outre, pour la régulation des onduleurs (9 à 12), un dispositif (23) de régulation, monté sur la plateforme (16) centrale.

3. Ensemble (8) d'onduleurs suivant l'une des revendications précédentes, dans lequel l'ensemble (8) d'onduleurs comprend, monté sur la plateforme (16) centrale, un système (18) de compensation de la puissance réactive dans le réseau (5) à tension alternative.

4. Ensemble (8) d'onduleurs suivant l'une des revendications précédentes, dans lequel il est prévu un autre onduleur, qui est monté sur la plateforme (16) centrale et qui est connecté du côté de la tension continue aux autres onduleurs (9 à 12) ainsi que, par la borne (13) de tension continue et du côté de la tension alternative, au réseau (15) à tension alternative.

5. Ensemble (8) d'onduleurs suivant la revendication 1, dans lequel les liaisons (22) de tension continue du côté de la tension continue pour connecter les onduleurs (9 à 12) entre eux passent respectivement par la plateforme (16) centrale.

6. Ensemble (8) d'onduleurs suivant l'une des revendications précédentes, dans lequel l'ensemble (8) d'onduleurs a, monté sur la plateforme centrale, un ensemble (19) de filtrage pour l'amortissement des harmoniques dans le réseau (5) à tension alternative.

7. Ensemble (8) d'onduleurs suivant l'une des revendications précédentes, dans lequel l'ensemble (8) d'onduleurs comprend en outre un dispositif (20) d'alimentation en électricité pour l'alimentation en électricité des onduleurs (9 à 12), le dispositif (20) d'alimentation en électricité étant monté sur la plateforme (16) centrale.

8. Ensemble (8) d'onduleurs suivant l'une des revendications précédentes, dans lequel chaque onduleur (9 à 12) comprend un système (14) de coupure de la tension alternative pour séparer une ligne de tension alternative, associée à l'onduleur, du réseau (5) à tension alternative, les systèmes (14) de coupure de tension alternative étant montés sur les structures de support.

9. Ensemble (8) d'onduleurs suivant l'une des revendications précédentes, dans lequel l'ensemble d'onduleurs comprend des ponts (17) de circulation, qui sont disposés entre la plateforme (16) centrale et les structures de support et qui relient celles-ci, les ponts (17) étant agencés pour la réception de liaisons de tension continue et de tension alternative.

10. Ensemble (8) d'onduleurs suivant l'une des revendications précédentes, dans lequel les structures de support peuvent être disposées en mer ou dans un lac, au moins l'une des structures de support étant dimensionnée pour maintenir une installation (4) éolienne.

11. Ensemble (8) d'onduleurs suivant l'une des revendications précédentes, dans lequel la plateforme (16) centrale comprend en outre :
- un emplacement d'atterrissage d'hélicoptère et/ou
- des abris pour des travailleurs et/ou
- un embarcadère de bateaux et/ou
- un réservoir de combustible.

12. Ensemble (8) d'onduleurs suivant l'une des revendications précédentes, dans lequel au moins l'un des onduleurs (9 à 12) est un redresseur unidirectionnel.

13. Ensemble (8) d'onduleurs suivant la revendication 12, dans lequel au moins un redresseur unidirectionnel est un redresseur à diode à six ou douze impulsions.

14. Installation (1) de transmission de puissance électrique entre un parc (2) éolien en mer ou sur un lac ayant une pluralité d'installations (4) éoliennes et un réseau (3) de distribution d'électricité du côté de la terre ferme, l'installation (1) comprenant un onduleur (6) à commutation autonome du côté de la terre ferme, ainsi qu'un ensemble (8) d'onduleurs suivant l'une des revendications 1 à 13, pouvant être connecté à l'onduleur (6) à commutation autonome au moyen d'une ligne (7) de tension continue.
